# EUROPÄISCHE PATENTSCHRIFT

(11) **EP 0 394 725 B1**
(45) Veröffentlichungstag und Bekanntmachung des Hinweises auf die Patenterteilung: **14.02.1996**
(21) Anmeldenummer: 90106592.0
(22) Anmeldetag: 06.04.1990
(51) Int. Cl.: H04L 7/00, H04J 3/06

(54) **Taktverteilereinrichtung**
Clock distribution device
Dispositif pour la distribution de signal d'horloge

(30) Priorität: 28.04.1989 DE 3914177
(43) Veröffentlichungstag der Anmeldung: 31.10.1990
(73) Patentinhaber: SIEMENS AKTIENGESELLSCHAFT, D-80333 München (DE)
(72) Erfinder: Binz, Reiner, Dipl.-Ing., D-8026 Ebenhausen (DE); Burghardt, Hartmut, Dr.-Ing., D-8150 Holzkirchen (DE)

(56) Entgegenhaltungen:
- US-A- 3 541 341
- US-A- 4 359 773
- TELCOM REPORT, BEIHEFT "DIGITALVERMITTLUNGSSYSTEM EWSD " Nr. 4, April 1981, PASSAU DE Seiten 43 - 48; H. GRÜNER ET AL.: 'Synchronisation der Vermittlungseinrichtungen in Digitalnetzen'
- IBM TECHNICAL DISCLOSURE BULLETIN, Bd. 23, Nr. 4, September 1980, New York, US, Seiten 1423-1428; M. Fromer: "Multi-Point Fiber-Optic signal distribution system".
- NTZ NACHRICHTECHNISCHE ZEITSCHRIFT, Bd. 38, Nr. 10, Oktober 1985, BERLIN, DE, Seiten 708-712; F.C. KUZNIK: 'Vermittlungssystem 5ESS-PRX für den öffentlichen Fernsprechverkehr'
- ELECTRICAL COMMUNICATION, Bd. 63, Nr. 3, März 1989, ROMFORD, GB, Seiten 249 - 256; F.C. CANO ET AL: 'New Generation of Low Capacity Optical Fibre Line Systems'
- OPTO ELEKTRONIK MAGAZIN, Bd. 2, Nr. 3, Juni 1986, COBURG, DE, Seiten 202-213; G. KNOBLAUCH: "Koppel- und Verteilerelemente (Stecker, Verzweiger, Mischer, Wellenlängenmultiplex-Komponenten)"
- PATENT ABSTRACTS OF JAPAN, vol. 6, no. 147 (E-123)(1025) 6. August 1982 & JP-A-57 068 941 ( FUJITSU ) 27. April 1982

## Beschreibung

Die Erfindung betrifft eine Taktverteileinrichtung für Fernmeldevermittlungsanlagen mit einem gedoppelten elektrischen Taktgenerator, wobei der jeweils wirksamgeschaltete Ausgang mit taktgesteureten Koppelnetzeinheiten verbunden ist.

Nach Übereinkommen der Postverwaltungen werden die nationalen Digitalnetze freilaufend betrieben. Diese Betriebsweise erfordert zur Vermeidung von Informationsverlusten eine hochgenaue Einhaltung der vorgegebenen Frequenz, sowie eine hohe Sicherheit gegen Ausfall des Taktsignals. Hierzu werden in den Digitalvermittlungen des Digitalnetzes vorgesehene zentrale Taktgeneratoren von einer zentalen Referenzfrequenzquelle geführt. Zur weiteren Erhöhung der Sicherheit gegen Ausfall des Taktsignals werden in den Digital-Vermittlungsstellen gedoppelte Taktgeneratoren vorgesehen, die sich gegenseitig kontrollieren und bei fehlerhaftem Betrieb des aktivgeschalteten Taktgenerators selbsttätig auf den anderen Taktgenerator umschalten.

Bei bekannten Taktverteileinrichtungen in Digitalvermittlungsstellen (vgl. telcom report 4 (1981), Beiheft "Digitalvermittlungssystem EWSD", Seiten 43...48), erfolgt die Verteilung des Taktsignals an mit dem Taktsignal zu versorgende Koppelnetzeinheiten über Kupferleitungen, wobei für jede Leitung ein Leitungstreiber vorgesehen werden muß; bei Einsatz einer erdsymmetrischen Kupferleitung mit einem Adernpaar müssen indessen zwei Leitungstreiber je Kupferleitung vorgesehen werden. Neben dem durch die Leitungstreiber bedingten Bauteileaufwand machen sich Leistunsverluste, wie sie beispielsweise durch die Umladung der Kupferleitungen bei einer für Digitalvermittlungsstellen typischen Taktfrequenz von 140 MHz oder in den Abschlußwiderständen der Kupferleitungen auftreten, nachteilig bemerkbar. Darüber hinaus sind bei diesen Taktfrequenzen besondere Maßnahmen notwendig, um die Abstrahlung bzw. Einstreuung von Störeinflüssen auf benachbarte Leitungen zu vermeiden.

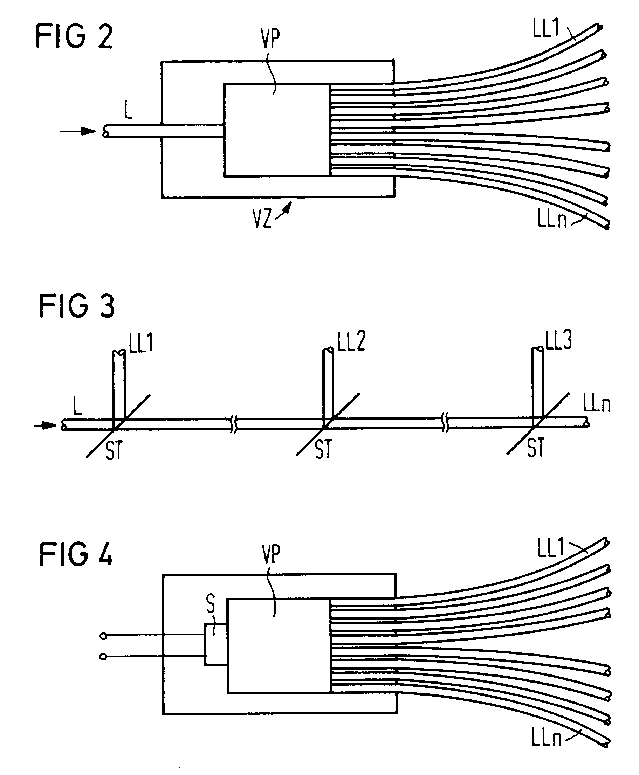

Aus IBM TECHNIKAL DISCLOSURE BULLETIN, Bd. 23, Nr 4, September 1980, NEW YORK US Seiten 1423 - 1428; M. Fromer: 'Multi-Point Fiber-optic signal distribution system', insbesondere dort Fig 4, ist eine Anordnung zur Verteilung eines Datensignales unter Verwendung von ein optisches Signal führenden Lichtwellenleitern und eines optischen Verzweigers bekannt. Bei einer solchen Anordnung ist die Anzahl von Empfangseinrichtungen, auf die das Datensignal ohne Zwischenverstarkung verteilt werden kann, begrenzt.

Der Erfindung liegt nun das Problem zugrunde eine Anordnung zur Verteilung eines Taktsignales anzugeben, welche die für eine rein passive Verteilung eines Datensignales gegebene Grenze des Teilverhaltnisses überwindet.

Das Problem wird bei dem eingangs umrissenen Gegenstand dadurch gelöst, daß
- der elektrische Taktgenerator über einen nachgeschalteten elektro-optischen Wandler und einen ihm nachfolgenden optischen, rein passiven Verzweiger mit den Eingängen einer Vielzahl von Koppelnetzeinheiten verbunden ist,
- die Koppelnetzeinheiten einen schmalbandigen Verstarker zum eingangsseitigen Empfang des Taktsignales aufweisen und
- die Vielzahl von Koppelnetzeinheiten erheblich größer ist als die mögliche Anzahl von Koppelnetzeinheiten für eine Verteilung eines Datensignals.

Die Erfindung bringt eine Reduzierung der minimal in das Verteilnetz einzuspeisenden optischen Leistung mit sich, womit eine entsprechende Verringerung der zur Speisung des elektro
- optischen Wandlers erforderlichen elektrischen Treiberleistung einhergeht. Darüberhinaus ist der anteilige Aufwand je Empfangseinheit an dem elektro - optischen Wandler verringert.

Einer weiteren Ausgestaltung der Erfindung zufolge können zwischen dem jeweils durchgeschalteten Taktgenerator TG1, TG2 und den taktgesteuerten Koppelnetzeinheiten zwei gesonderte Verbindungen vorgesehen sein. Dabei steht das Taktsignal bei sämtlichen Koppeleinheiten über zwei unabhängige Übertragungswege an; die Taktverteileinrichtung weist somit zusätzlich eine entsprechende Wegeredundanz auf.

In weiterer Ausgestaltung der Erfindung kann der optische Verzweiger mehrstufig aufgebaut sein, was es gegebenenfalls erleichtern kann, der jeweiligen räumlichen Änderung der Koppelnetzteile Rechnung zu tragen. Dabei kann auf zusätzliche Versorgungsleitungen verzichtet werden, da es sich bei den Verzweigern um rein passive Bauteile handelt. Die Baugruppe, die den Taktgenerator trägt, kann für jede Digitalvermittlungsstellengröße die gleichen Abmessungen aufweisen; für jede zusätzliche mit dem Taktsignal zu versorgenden Baugruppe ist lediglich eine zusätzliche Verzweigerstufe vorzusehen.

Einer anderen Ausgestaltung der Erfindung zufolge können der elektro-optische Wandler und der optische Verzweiger eine Baueinheit bilden, bei der der Lichtwellenleiter zwischen dem elektro-optischen Wandler und dem optischen Verzweiger entfallen kann. Diese Ausgestaltung der Erfindung erlaubt eine weitere Reduzierung des Bauteileaufwands, da die optischen Verzweiger in den optisch-elektrischen Wandler integriert sind. Diese Ausgestaltung der Erfindung erweist sich als besonders vorteilhaft bei einer sternförmigen Anordnung der mit dem Taktsignal zu versorgenden Koppelnetzeinheiten um den Taktgenerator herum.

In weiterer Ausgestaltung der Erfindung können im elektr-optischen Wandler eine Mehrzahl von elektrischen parallelgeschalteten Sendern vorgesehen sein.

Weitere Besonderheiten der Erfindung werden aus der nachfolgenden näheren Erläuterung der Erfindung anhand der Zeichnungen ersichtlich. Dabei zeigen
- Figur 1: das Schema einer erfindungsgemäßen Taktverteileinrichtung,
- Figur 2: einen Verzweigerbaustein,
- Figur 3: einen mehrstufigen Verzweiger und
- Figur 4: die Kombination von elektro-optischem Wandler und optischem Verzweiger.

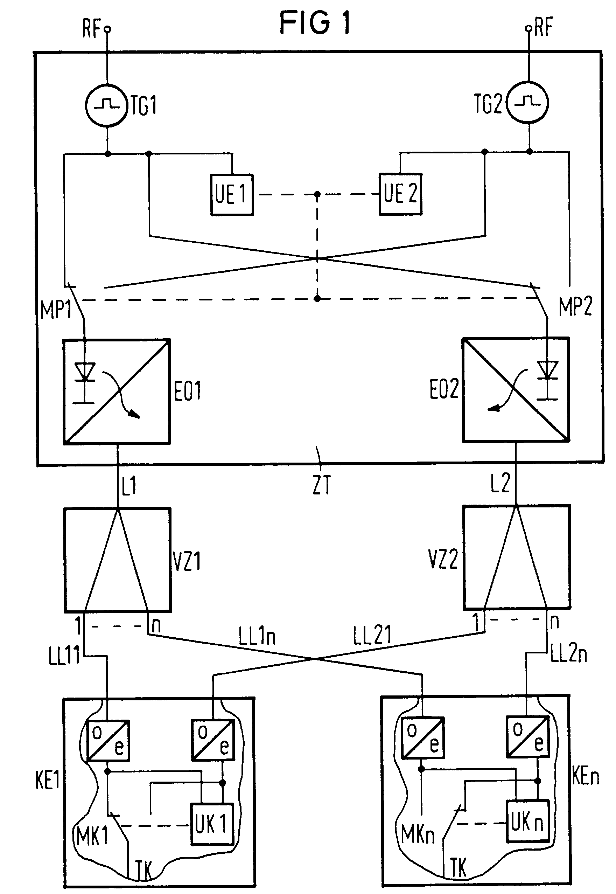

In Figur 1 ist schematisch in zum Verständnis der Erfindung erforderlichem Umfang eine Taktverteileinrichtung skizziert, bei der das Taktsignal von einer Taktbaugruppe ZT zu Koppelnetzeinheiten KE1...KEn auf optischem Weg übertragen wird. Mit den Ausgängen zweier Taktgeneratoren TG1, TG2, denen jeweils über einen Eingang RF ein Referenzsignal zugeführt wird, sind taktgeneratorindividuelle Uberwachungsschaltungen UE1, UE2 verbunden, die ihrerseits Umschalter MP1, MP2 steuern. Die Umschalter MP1, MP2 verbinden entweder den Ausgang des Taktgenerators TG1 oder den Ausgang des Taktgenerators TG2 mit den Eingängen zweier elektrooptischer Wandler E01, E02. Die elektro-optischen Wandler E01, E02 sind jeweils über einen Lichtwellenleiter L1, L2 mit jeweils einem Verzweiger VZ1, VZ2 verbunden; Lichtwellenleiter LL11... LL1n, LL21...LL2n verbinden jeden Verzweiger VZ1, VZ2 mit jeder Koppelnetzeinheit KE1...KEn. Die Koppelnetzeinheiten KE1...KEn weisen jeweils zwei opto-elektrische Wandler o/e auf, deren Ausgänge mit den Umschaltkontakten jeweils eines Umschalters MK1... MKn und den Eingängen einer Überwachungsschaltung UK1...UKn verbunden sind, die wiederum den jeweiligen Umschalter MK1...MKn steuert.

Die Taktgeneratoren TG1, TG2 können, wie dies beispielsweise aus telcom report, a.a.O., bekannt ist, mit zwei Taktgeneratoren gebildet sein, die über ein an ihrem Eingang RF anliegendes Referenzsignal synchronisiert werden. Dieses Referenzsignal kann beispielsweise durch ein aus einem den Digitalvermittlungsstellen übergeordneten Frequenzkontrollnetz abgeleitetes 8 kHz- Signal gegeben sein. Die Umschalter MP1, MP2, die zweckmäßierweise durch elektronische Schalter realisiert werden, stellen sicher, daß jeweils nur das Ausgangssignal eines Taktgenerators TG1, TG2 den elektro-optischen Wandlern E01, E02 zugeführt wird. Die Uberwachungsschaltungen UE1, UE2, die die Umschalter MP1, MP2 steuern, überwachen einerseits das Ausgangssignal des Taktgenerators, der über die Umschalter MP1, MP2 mit den elektro-optischen Wandlern E01, E02 verbunden ist, bezüglich Tastverhältnis und Periodendauer des Taktsignals, und andererseits den Gleichlauf der Taktgeneratoren TG1, TG2, wobei sie bei Überschreiten einer vorgegebenen Fehlergrenze auf den bisher im hot- standby-Betrieb laufenden Taktgenerator umschalten. Ergänzend sei hier angemerkt, daß eine Umschaltung von einem Taktgenerator TG1, TG2 auf den anderen Taktgenerator TG2, TGI auch von einer hier nicht näher dargestellten zentralen Steuereinheit aus erfolgen kann.

Die elektro-optischen Wandler E01, E02 können durch handelsübliche Bauteile gegeben sein, bei denen das in einer Sendediode durch ein elektrisches Eingangssignal erzeugte Lichtsignal in einen Lichtleiter eingespeist wird.

Die Verzweiger VZ1, VZ2 können, wie dies in FIG 2 dargestellt ist, in an sich bekannter Weise ausgebildet sein; so können die Verzweiger VZ beispielsweise, wie dies aus dem Ergänzten Sonderdruck aus "OPTO ELEKTRONIK MAGAZIN" (1986), Heft 3, Seite 202 bis 213 der Siemens AG bekannt ist, durch Mischer gebildet sein, an deren Eingang ein einziger Lichtleiter L das zu verzweigende Signal einem Verzweigerplättchen VP zuführt, durch das das Licht auf eine Mehrzahl von ausgangsseitigen Lichtleitern LL1...LLn verzweigt wird.

Einer anderen Ausführungsform der Erfindung zufolge können die Verzweiger VZ1, VZ2 mehrstufig ausgebildet sein. Dazu ist es möglich, den Ausgang eines Verzweigers, wie er in FIG 2 dargestellt ist, mit dem Eingang eines entsprechenden nachfolgenden Verzweigers zu verbinden. Ebenso gut ist es auch möglich, einen mehrstufigen Verzweiger durch die Hintereinanderschaltung mehrerer optischer Verzweiger, die nach dem Strahlteilerprinzip arbeiten, zu realisieren. Solche Verzweiger können, wie dies in FIG 3 oder beispielsweise in dem Ergänzten Sonderdruck aus "OPTO ELEKTRONIK MAGAZIN" (1986), Heft 3, Seite 202 bis 213, dargestellt ist, jeweils mit einem teildurchlässigen Strahlteilerspiegel ST gebildet sein, an dem das von einem Lichtleiter L herangeführte optische Signal zum einen Teil in einen Lichtleiter LL1, LL2, LL3 abgelenkt wird, - der dann in einer Taktverteileinrichtung gemäß der Erfindung zu einer mit dem Taktsignal zu versorgenden Koppelnetzeinheit führt - , und zum anderen Teil unter Beibehaltung der ursprünglichen Ausbreitungsrichtung durch den Strahlteilerspiegel hindurchtritt und in einem Lichtwellenleiter weitergeführt wird.

Einer anderer Ausgestaltung der Erfindung zufolge bilden der elektro-optische Wandler EO und der optische Verzweiger VZ eine Baueinheit; dazu kann der aus dem Ergänzten Sonderdruck aus "OPTO ELEKTRONIK MAGAZIN" (1986), Heft 3, Seite 202 bis 213 bekannte Mischer dahingehend modifiziert sein, daß, wie dies auch in FIG 4 dargestellt ist, eine lichtemittierende Sendediode S ohne Zwischenschaltung einer Lichtleitfaser direkt in ein Verzweigerplättchen VP sendet, von dem das optische Sendesignal auf die ausgangsseitigen Lichtleiter LL1...LLn verteilt wird.

Bei der erfindungsgemäßen Taktverteileinrichtung ist eine Taktverteilung auf eine Vielzahl von mit dem Taktsignal zu versorgenden Koppelnetzeinheiten KE1...KEn möglich, auch wenn bei den einzelnen mit dem Taktsignal zu versorgenden Koppelnetzeinheiten KE1...KEn, bedingt durch das dann entsprechend kleine Teilverhältnis (entsprechend der Anzahl von Koppelnetzeinheiten) und durch Durchgangsdämpfungen entlang des optischen Verteilweges nur relativ wenig optische Leistung ankommt, die indessen ausreicht, um einen schmalbandigen, und damit eine hohe Verstärkung zulassenden entsprechend rauscharmen Verstärker, eingangsseitig zu speisen. Es zeigte sich nämlich überraschenderweise, daß die Verteilung des Taktsignals, das ein schmalbandiges Frequenzspektrum aufweist, auf eine sehr viel größere Anzahl von mit dem Taktsignal zu versorgenden Koppelnetzeinheiten möglich ist, als dies von optischen Datenübertragungssystemen bekannt ist, oder durch mathematische Berechnungen zu erwarten gewesen wäre.

Zur Erhöhung der optischen Leistung, die den Koppelnetzeinheiten KE1...KEn zugeführt wird, ist es möglich, in den elektro-optischen Wandlern E01, E02 bzw. in den kombinierten elektro-optischen Wandler-Verzweigern entsprechend FIG 4 eine Mehrzahl von Sendedioden S vorzusehen, die das von ihnen abgegebene optische Signal parallel abstrahlen und so eine erhöhte optische Leistung in das optische Taktverteilsystem einspeisen.

Wie dies auch aus FIG 1 ersichtlich ist, wird jeder Koppelnetzeinheit KE1...KEn das Taktausgangssignal des Taktgenerators TG1, TG2, dessen Ausgang über die Umschalter MP1, MP2 gerade mit den elektro-optischen Wandlern E01, E02 verbunden ist, über zwei voneinander unabhängige optische Verteilwege zugeführt. Dort werden die optischen Signale in opto-elektrischen Wandlern o/e, die für sich hinreichend bekannt sind und die im wesentlichen eine Fotodiode oder einen Fototransistor mit nachgeschaltetem Vorverstärker enthalten, in ein elektrisches Signal umgesetzt, das mit Hilfe einer Überwachungseinheit UK1... UKn auf sein Vorhandensein überwacht wird. Bei Ausfall des Taktsignals, das der jeweiligen Koppelnetzeinheit KE1...KEn gerade zugeführt wird, schaltet die jeweilige Überwachungsschaltung UK1...UKn den zugehörigen Umschalter MK1...MKn auf die Taktversorgungsleitung um, die den jeweils anderen optischen Verbindungsweg zur jeweiligen Koppelnetzeinheit KE1...KEn bildet. Ergänzend sei hier noch angemerkt, daß die Uberwachungsschaltungen UK1...UKn Zustandssignale an eine hier nicht weiter dargestellte Zentraleinheit abgeben können, die dem Uberwachungszustand entsprechen; diese Zentraleinheit kann bedarfsweise die Umschalter MK1...MKn über die Überwachungsschaltungen UK1 ...UKn in eine bestimmte Position bringen.

## Patentansprüche

1. Taktverteileinrichtung für Fernmeldevermittlungsanlagen mit einem gedoppelten elektrischen Taktgenerator (TG1, TG2), wobei der jeweils wirksamgeschaltete Ausgang mit taktgesteuerten Koppelnetzeinheiten (KE1, KE2) verbunden ist,
**dadurch gekennzeichnet, daß**
- der elektrische Taktgenerator über einen nachgeschalteten elektro-optischen Wandler (EO1, EO2) und einen ihm nachfolgenden optischen, rein passiven Verzweiger (VZ1, VZ2) mit den Eingängen einer Vielzahl von Koppelnetzeinheiten verbunden ist,
- die Koppelnetzeinheiten einen schmalbandigen Verstärker zum eingangsseitigen Empfang des Taktsignales aufweisen und
- die Vielzahl von Koppelnetzeinheiten erheblich größer ist als die mögliche Anzahl von Koppelnetzeinheiten für eine Verteilung eines Datensignals.

2. Anordnung nach Anspruch 1,
**dadurch gekennzeichnet**,
daß redundante Verbindungen zur Übertragung des Taktsignales von dem Taktgenerator über jeweils einen elektro-optischen Wandler und einen Verzweiger zu einer der Koppelnetzeinheiten gegeben sind.

3. Anordnung nach einem der Ansprüche 1 oder 2,
**dadurch gekennzeichnet**,
daß der Verzweiger mehrstufig aufgebaut ist.

4. Anordnung nach einem der Ansprüche 1 oder 2,
**dadurch gekennzeichnet**,
daß der elektro-optische Wandler und der Verzweiger eine Baueinheit bilden.

5. Anordnung nach einem der Ansprüche 1 bis 4,
**dadurch gekennzeichnet**,
daß im elektro-optischen Wandler eine Mehrzahl von elektrisch parallelgeschalteten optischen Sendern vorgesehen ist.

6. Anordnung nach einem der vorstehenden Ansprüche,
**gekennzeichnet**
durch eine Umschalteinrichtung (MP1, MP2), die jeweils nur eines der von den Taktgeneratoren ausgangsseitig abgegebenen Taktsignalen zur Verteilung auf die Koppelnetzeinheiten durchschaltet.

7. Anordnung nach einem der Ansprüche 2 bis 6,
**dadurch gekennzeichnet**,
daß die Koppelnetzeinheiten redundante optisch-elektrische Wandler und einen Umschalter (MK1, MKn) aufweisen, über den das über nur eine Verbindung herangeführte Taktsignal durchgeschaltet ist.

8. Anordnung nach Anspruch 7,
**dadurch gekennzeichnet**,
daß der Umschalter einer Koppelnetzeinheit nach Maßgabe einer zugehörigen Überwachungseinrichtung (UK1, UKn) gesteuert ist.

## Claims

1. Clock distribution device for telecommunication exchanges, having a double electrical clock generator (TG1, TG2), the respectively activated output being connected to clock-controlled switching matrix array units (KE1, KE2), characterized in that
- the electrical clock generator is connected via a downstream electro-optical transducer (EO1, EO2) and an optical, purely passive brancher (VZ1, VZ2) downstream of the latter to the inputs of a multiplicity of switching matrix array units,
- the switching matrix array units have a narrow-band amplifier for reception of the clock signal on the input side and
- the multiplicity of switching matrix array units is considerably greater than the possible number of switching matrix array units for a distribution of a data signal.

2. Arrangement according to Claim 1, characterized in that there are redundant connections for the transmission of the clock signal from the clock generator via in each case an electro-optical transducer and a brancher to one of the switching matrix array units.

3. Arrangement according to one of Claims 1 or 2, characterized in that the brancher is of a multi-stage design.

4. Arrangement according to one of Claims 1 or 2, characterized in that the electro-optical transducer and the brancher form one structural unit.

5. Arrangement according to one of Claims 1 to 4, characterized in that a plurality of optical transmitters connected electrically in parallel is provided in the electro-optical transducer.

6. Arrangement according to one of the preceding claims, characterized by a switchover means (MP1, MP2), which in each case switches through for distribution to the switching matrix array units only one of the clock signals emitted by the clock generators on the output side.

7. Arrangement according to one of Claims 2 to 6, characterized in that the switching matrix array units have redundant optical-electrical transducers and a switchover means (MK1, MKn), by means of which the clock signal supplied is switched through via only one connection.

8. Arrangement according to Claim 7, characterized in that the switchover means of a switching matrix array unit is controlled in accordance with an associated monitoring means (UK1, UKn) .

## Revendications

1. Dispositif de distribution de cadence pour des installations de commutation de télécommunication, comportant un générateur de cadence électrique en double (TG1,TG2), la sortie placée à l'état actif étant reliée à des unités (KE1,KE2) d'un réseau de connexion, commandées de façon cadencée, caractérisé par le fait que
- le générateur électrique de cadence est relié par l'intermédiaire d'un transducteur électro-optique (EO1, EO2) branché en aval et d'un dispositif de répartition optique purement passif (VZ1, VZ2), branché en aval de ce transducteur, aux entrées d'une multiplicité d'unités du réseau de connexion,
- les unités du réseau de connexion comportent un amplificateur à bande étroite pour la réception, côté entrée, du signal de cadence, et
- le nombre d'unités du réseau de connexion est nettement supérieur au nombre possible d'unités du réseau de connexion pour une distribution d'un signal de données.

2. Dispositif suivant la revendication 1, caractérisé par le fait que des liaisons redondantes sont établies pour la transmission du signal de cadence du générateur de cadence à l'une des unités du réseau de connexion par l'intermédiaire d'un transducteur électro-optique et d'un dispositif de répartition.

3. Dispositif suivant l'une des revendications 1 ou 2, caractérisé par le fait que le dispositif de répartition est constitué de plusieurs étages.

4. Dispositif suivant l'une des revendications 1 ou 2, caractérisé par le fait que le transducteur électro-optique et le dispositif de répartition forment une unité de construction.

5. Dispositif suivant l'une des revendications 1 à 4, caractérisé par le fait que dans le transducteur électro-optique est prévue une multiplicité d'émetteurs optiques branchés électriquement en parallèle.

6. Dispositif suivant l'une des revendications précédentes, caractérisé par un dispositif de commutation (MP1, MP2), qui ne transmet que l'un des signaux de cadence fournis côté sortie par les générateurs de cadence, pour la distribution aux unités du réseau de connexion.

7. Dispositif suivant l'une revendications 2 à 6, caractérisé par le fait que les unités du réseau de connexion comportent des transducteurs opto-électriques redondants et un commutateur (MK1, MKn), par l'intermédiaire duquel est transmis le signal de cadence envoyé par l'intermédiaire d'une seule liaison.

8. Dispositif suivant la revendication 7, caractérisé par le fait que le commutateur d'une unité du réseau de connexion est commandé en fonction d'un dispositif de contrôle associé (UK1, UKn).
